# EUROPEAN PATENT APPLICATION

(11) **EP 1 251 279 A2**
(43) Date of publication of application: **23.10.2002**
(21) Application number: 02076509.5
(22) Date of filing: 16.04.2002
(51) Int. Cl.: F04C 29/08, F16K 1/34

(54) **Damped valve**

(30) Priority: 16.04.2001 US 835716
(71) Applicant: Stokes Vacuum Inc., Philadelphia, PA 19120 (US)
(72) Inventor: Cerovich, Christopher J., Pennsylvania 19010 (US)
(74) Representative: Sanderson, Laurence Andrew

(57) **Abstract**

A damped poppet valve is disclosed. The valve has a valve element movable into and out of engagement with a valve seat to open and close the valve. A damping piston attached to the valve element is slidably received within a damping chamber along a path of travel toward and away from the valve seat. The chamber has an orifice which is small relatively to the cross-sectional area of the piston. The piston forces fluid through the orifice as it moves along the path of travel, thereby damping motion of the valve element.

## Description

This invention concerns valves whose action is damped to reduce noise of machinery operation and especially damped poppet valves used in vacuum pumps.

Valves are essential components of many machines such as pumps, engines, turbines and automatic transmissions and are the heart of almost every pneumatic or hydraulic device. The dynamic characteristics of certain valves, such as poppet valves, which open and close automatically in response to pressure differentials, may substantially affect the overall operation and performance of the machine of which they are a part.

Poppet valves typically comprise a seat, a valve element which is movable into and out of sealing engagement with the seat to effect closing and opening of the valve and a biasing member, such as a spring, which biases the valve element into engagement with the seat. The valve element is not moved by an actuator, but is free floating and therefore able to open in response to a pressure differential across the valve seat, the biasing member effecting closing of the valve when the pressure differential falls below a threshold value determined by the stiffness of the spring. Such valves are thus dynamic systems which will respond independently to periodic disturbances, such as pressure pulses of a particular frequency, caused by other components in the machine.

The valve response is based upon the dynamic characteristics of the valve, which are determined by the mass of the moving part or parts, the stiffness of the biasing member and the damping present in the valve. These parameters may be adjusted to provide a valve which cooperates effectively with the other components of the machine to alter the performance of the machine in a desired way.

For certain machines employing poppet valves, such as vacuum pumps, the valve dynamic characteristics have a significant effect on the operation of the machine in terms of speed, efficiency and noise levels achieved.

The level of noise associated with machine operation is an important factor which can cause occupationally induced hearing loss in people working with or around noisy machinery. OSHA, the Occupational Safety and Health Administration, recognizes occupationally induced hearing loss as one of the leading occupational illnesses in the U.S.
Occupational exposure to noise levels in excess of OSHA standards places hundreds of thousands of workers at risk of adverse auditory and extra auditory effects. The auditory effects include chronic noise-induced hearing loss, a permanent sensorineural condition that is currently not medically treatable, as well as a frequency shift in a person's hearing threshold. Extra-auditory effects include interference with the understanding of speech, increased stress levels, interference with sleep, lower morale, lower work efficiency, interference with mental concentration and increased fatigue levels.

Clearly, decreased noise levels for machinery operation are desirable to promote a more efficient, healthy, and safe workplace environment. For certain machines, such as vacuum pumps, significant reductions in noise levels may be achieved by using the improved poppet valves according to the invention as described below.

The invention concerns a damped valve, such as a poppet valve, having a valve element and a valve seat for the valve element. The valve element is movable into and out of engagement with the seat to open and close the valve. A biasing member engages the valve element and biases it into engagement with the seat.

The valve also has a damping piston attached to the valve element. Preferably, the piston projects in a direction away from the valve seat. A damping chamber is provided within which the piston is slidably received. The piston moves within the chamber along a path of travel extending toward and away from the valve seat. The damping chamber has an orifice which is small relatively to the cross-sectional area of the piston. The orifice is positioned along the path of travel away from the valve seat. The piston forces fluid within the chamber through the orifice and thereby damps motion of the valve element as the piston moves along the path of travel away from and toward the valve seat.

Effective damping which results in quieter running machinery is achieved when the ratio of the volume of the damping chamber swept by the piston to the total orifice area is between about 43 to 1 and about 1 to 1. Effective damping is also achieved when the ratio of the chamber cross-sectional area to the total orifice cross-sectional area is between about 143 to 1 to about 5 to 1. The fluid within the chamber may be gaseous, a mixture of a gas and a liquid or a liquid. The gas may be air and the liquid may be petroleum based lubricating oil, polychlorotrifluoroethylene, perfluoropolyether, to cite several practical examples.

It is an object of the invention to provide a damped valve.

It is another object of the invention to provide a damped valve in the form of a poppet valve.

It is yet another object of the invention to provide a damped valve usable as a discharge valve.

It is still another object of the invention to provide a damped valve which effects a reduction in the noise level of a machine into which the valve is incorporated.

It is again another object of the invention to provide a damped valve which allows a vacuum pump to run more quietly.

These and other objects and advantages of the invention will become apparent from consideration of the following drawings and detailed description of the preferred embodiment of the invention.
Figure 1 is a perspective view of a damped poppet valve assembly according to the invention;
Figure 2 is an exploded perspective view of the damped poppet valve assembly shown in Figure 1;
Figure 3 is a sectional view taken along lines 3-3 of Figure 1; and
Figure 4 is a sectional view of a vacuum pump using the damped poppet valve assembly shown in Figure 1.

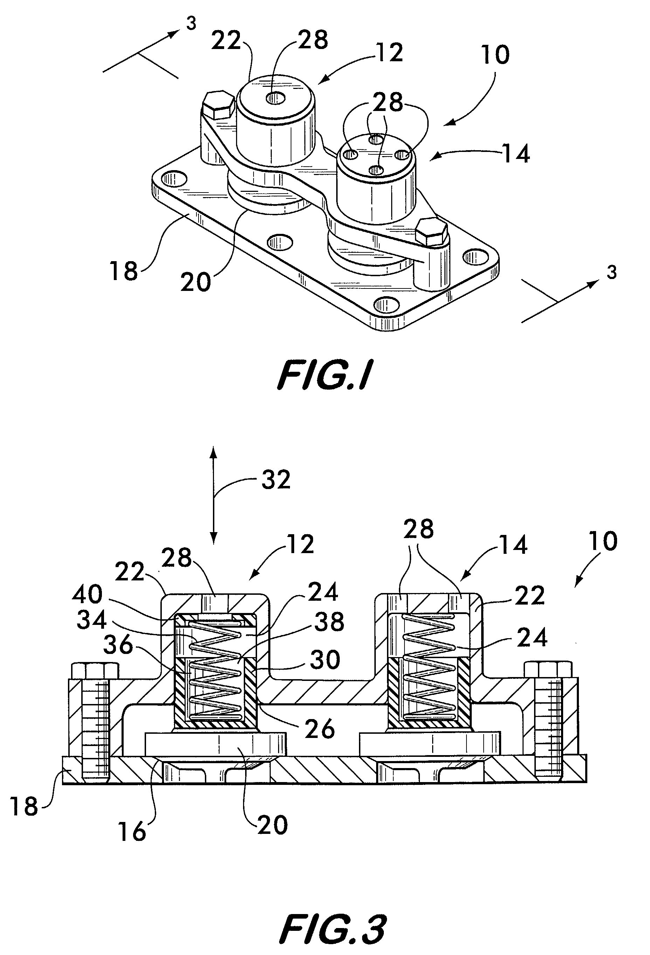

Figure 1 shows a poppet valve assembly 10 comprising two embodiments of damped poppet valves 12 and 14 respectively. Valve 12 is described below in detail, valve 14 being also described to explain the differences between the embodiments.

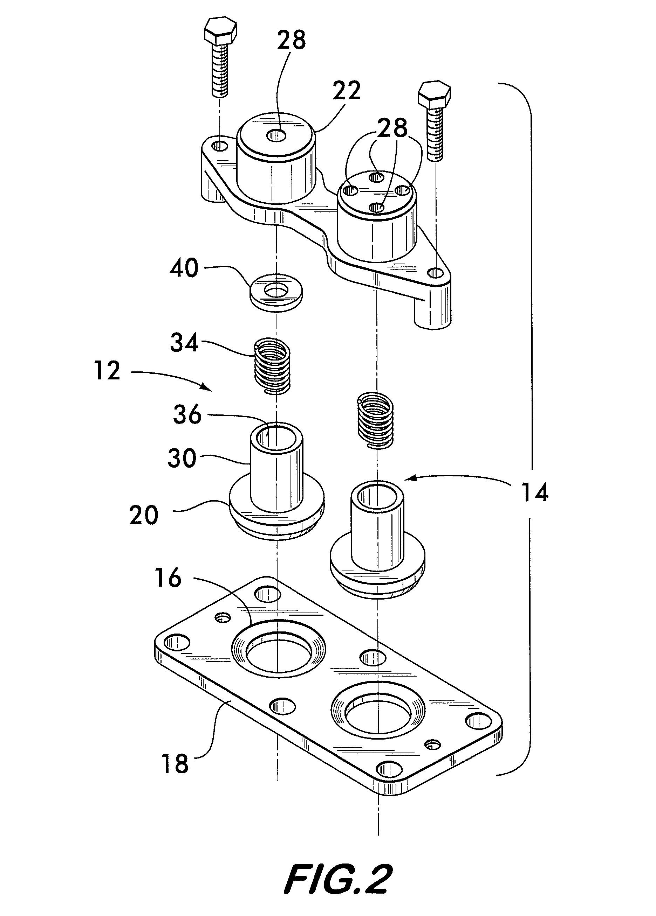

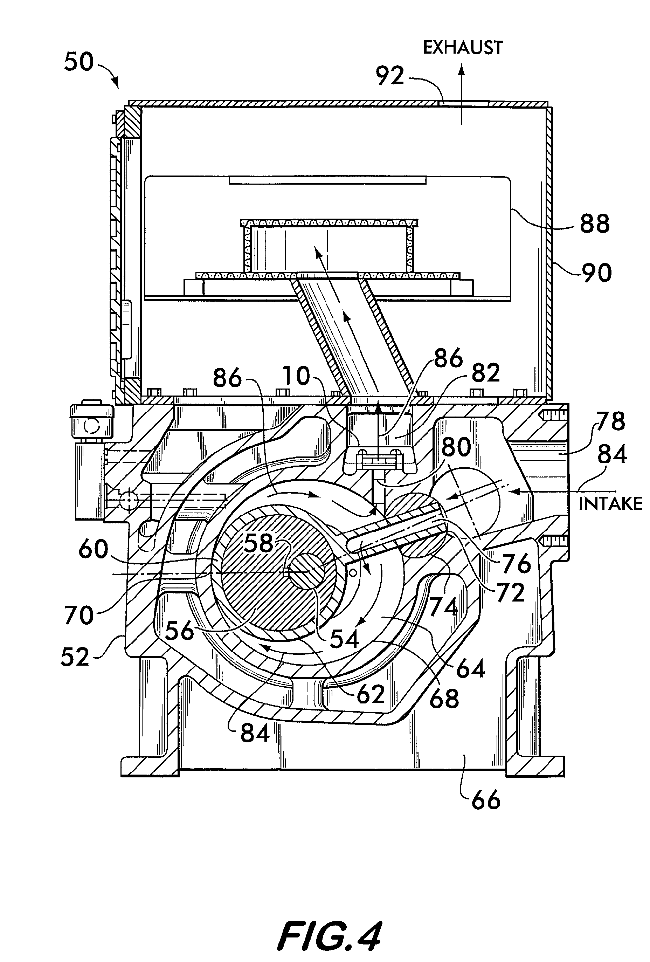

As shown in Figure 2, valve 12 has a valve seat 16, preferably formed as a chamfered surface in a base plate 18 used to mount the valve assembly 10 onto a machine, such as a vacuum pump as shown in Figure 4. A valve element 20 is movable substantially perpendicularly to seat 16 into and out of sealing engagement with the seat to effect opening and closing of the valve. Figure 3 shows the valve element 20 in sealing engagement with the valve seat 16.

As further seen in Figures 2 and 3, a housing 22 is positioned in spaced relation to the seat 16. The housing defines an elongated damping chamber 24 with an opening 26 located at one end, preferably facing seat 16, and an orifice 28 at the other end. (Valve 14 shows an alternate valve embodiment having a plurality of orifices 28.) A damping piston 30 is attached to the valve element 20, the piston being sized to pass through opening 26 and substantially block chamber 24 in the manner of a piston and cylinder arrangement.
The size tolerance between the piston and the chamber are such that piston 30 is prevented from any substantial lateral motion but is readily movable lengthwise within chamber 24 along the path of travel indicated by arrow 32. Motion of the piston 30 within chamber 24 allows the valve element 20 to move into and out of engagement with seat 16 to open and close the valve. By constraining the motion of piston 30, chamber 24 serves as a guide defining the permitted motion of the valve element and keeping it properly aligned with the valve seat.

A biasing member, preferably in the form of a coil spring 34, engages the valve element 20 to bias it into engagement with the valve seat 16. Engagement of the biasing member with the valve element may be indirect, as, for example, if the spring engages the piston 30 attached to the valve element, or by direct physical contact with the valve element 20 itself. Preferably, as shown in Figures 2 and 3, the piston has a receptacle 36 with an opening 38 facing the orifice 28. The receptacle holds the spring 34 in place between the valve element 20 and the housing 22 allowing the spring to perform its biasing function. To prevent wear of the spring against the housing, a sacrificial washer 40 may be interposed between the two components. The washer is an inexpensive part which may be easily replaced at regular intervals as it wears out, thereby prolonging the life of the more expensive components such as the spring and the housing.

Preferably, the valve seat 16 (as well as the base plate 18) and the housing 22 are made of stainless steel to provide long life to the valve without concern for corrosion. The valve element 20 and piston 30 are integrally formed from plastic material such as PEEK. This combination of materials allows the valve element to be self centering and self lapping after a relatively short running in period to ensure a tight seal with minimal leakage.

Damping of the valve is provided by the interaction of the piston 30 reciprocating within chamber 24 during valve opening and closing. Since the piston substantially blocks the chamber like a piston within a cylinder, the reciprocal motion of the piston alternately draws and expels fluid through the orifice or orifices 28. Depending upon its size, an orifice offers more or less resistance to fluid flow into and out of the chamber and controls the rate at which fluid flows. Moving the fluid against this resistance requires work and, thus, provides a damping mechanism which removes energy from the dynamic system comprising the valve element, piston and spring. The fluid may be gaseous, liquid, or a combination of both and is generally present as ambient fluid to be acted upon by the valve. The rate of damping may be adjusted by varying the total area of the orifice (or orifices) 28 in relation to the volume of the chamber 24 swept by the piston 30. The damping rate may also be considered as a function of the ratio of the chamber diameter to the orifice diameter or the chamber cross-sectional area to the total orifice area.

Valves according to the invention having some significant damping have been used effectively to quiet the operation of vacuum pumps, as shown in the following example.

### Rotary-Piston Vacuum Pump Example

Figure 4 shows a rotary-piston vacuum pump 50 comprising a casing or housing 52 in which a drive shaft 54 is supported on bearings (not shown) arranged at spaced locations lengthwise of the shaft. Eccentric 56 is mounted on shaft 54 and fixed to rotate with the shaft by key 58. Rotary piston 60, having an exterior surface 62, is mounted on eccentric 56. Rotary piston 60 forms a sleeve surrounding the eccentric 56, the eccentric turning within the sleeve and causing the piston to move within a cylinder 64 within the pump housing 52. Cylinder 64, along with end walls 66 (only one being shown), define a cylindrical chamber having a cylindrical interior surface 68, the piston exterior surface 62 contacting the cylindrical interior surface 68 at a tangent point 70.

Rotary piston 60 has a radially extending piston slide 72 supported in housing 52 by floating hinge bars 74. Hinge bars 74 are free to oscillate in support of slide 72 as the piston moves within cylinder 64.
Piston slide 72 has an intake passage 76 which connects the pump intake 78 to the cylinder 64. An exhaust passage 80 is positioned in the housing on the side of slide 72 opposite intake passage 76. Exhaust passage 80 connects the cylinder 64 with the pump exhaust port 82. Damped poppet valve assembly 10 is arranged in exhaust passage 80 to act as a discharge valve and prevent a back flow of gases, as well as oil or other lubricating fluids, into the cylinder 64.

Shaft 54 is driven by an electric motor (not shown). As the shaft turns, the eccentric 56 turns with it, causing rotary piston 60 to move within cylinder 64. Air is drawn into cylinder 64 (as shown by arrows 84 in Figure 4) through pump intake 78 and intake passage 76 as rotary piston 60 moves away from the pump intake 78 in its motion. As shaft 54 continues to rotate, rotary piston 60 is moved back toward the pump intake. Slide 72 slides within hinge bars 74 closing intake passage 76, thus, trapping a volume of air within cylinder 64. The trapped air volume is displaced around the cylinder as rotary piston 60 continues in its motion. The air is forced out of the cylinder through exhaust passage 80, passing through poppet valve assembly 10 before exiting through exhaust port 82 as shown by arrows 86. The air enters a fluid separator 88 where oil or other liquid from the pump, used to lubricate the moving parts and also provide a fluid seal between the rotary piston 60 and the cylinder 64, is separated out and returned to reservoir 90. The air then exits the reservoir 90 through exit port 92.

When the vacuum pump is used to move non-reactive, inert gases such as air or nitrogen, petroleum based lubricants, such as SAE grade 10W-40 motor oil are used. The pump typically operates at a temperature between 100°F and 210°F, and the viscosity of the oil ranges between about 800 Saybolt units to about 52 Saybolt units over this temperature range. However, for reactive gases such as pure oxygen, hydrogen, or strong oxidizers, lubricants such as polychlorotrifluoroethylene and perfluorether are used. Polychlorotrifluoroethylene has a viscosity of about 850 Saybolt units at 100°F and about 60 Saybolt units at 200°F. Perfluorether has a viscosity of about 350 Saybolt units at 100°F and about 27 Saybolt units at 240°F.

When vacuum pump 50 is connected to a closed vessel (not shown), such as a test chamber for a space satellite or a vacuum deposition apparatus, the pump initially runs relatively quietly as the air is evacuated from the vessel. The pump becomes nosier as the vacuum increases, however, and is noisiest when the maximum vacuum is drawn and the vessel is virtually totally evacuated. At this point the vacuum pump is moving more oil than air but is run continuously to hold the high vacuum.

For the vacuum pump as described above, lubricated with SAE grade 10W-40 motor oil and using a damped poppet valve assembly according to the invention, noise level measurements of 76 dBA were recorded under test conditions with the pump intake sealed off and the pump running continuously to maintain a high vacuum simulating operation in its noisiest regime. This is significantly below the 8 hour duration sound level of 90 dBA permitted by OSHA. When other types of undamped valves are substituted for the damped poppet valve and tested under the same conditions, significantly higher pump noise levels are recorded, as shown in Table 1 below.

**Table 1**

| Vacuum Pump Noise Level Measurement Results for Different Valves | |
|---|---|
| Valve Type | Noise Level (dBA) |
| Damped Poppet | 76 |
| Reed Valve | 79 |
| Post Guided Poppet | 87 |
| Floating Cap | 85 |

The damped poppet valve assembly 10 according to the invention used in the tests had two poppet valves positioned side-by-side, each valve having an orifice with a diameter of 0.25 inches, a chamber with a diameter of 0.75 inches and a swept volume of 0.115 cubic inches. It is believed that when the pump is not drawing a significant volume of air, lubricating oil passing through the valve assembly 10 and present in the exhaust port 82 is drawn into and expelled from the chamber 24 through the orifice 28 as the valve reciprocates between the open and closed positions. This action provides significant damping which alters the dynamic characteristics of the valve and favorably affects the operation of the entire vacuum pump, allowing it to run more quietly in what is normally its noisiest mode of operation. Quieter operation is also an indication that the pump is operating with less wear or damage to relatively moving parts, thus, increasing the life of the pump and the time between required maintenance.

Further testing indicates that improved pump performance, including even further reduced noise levels, are achievable with orifice diameters between about 0.0625 inches and about 0.3125 inches for the chamber with a 0.75 inch diameter. It is further believed that improved pump performance is attainable with damped valves according to the invention, wherein the ratio of the volume of the chamber swept by the piston to the total orifice area is between about 43 to 1 to about 1 to 1. Total orifice area means the total effective area of a single orifice, or the sum of the areas of all of the orifices when a plurality of orifices are present.

The damping may also be related to the ratio of the total orifice area to the damping chamber cross sectional area. It is further believed that improved vacuum pump performance will be attained when the ratio of the damping chamber cross-sectional area to the total orifice cross-sectional area is between about 143 to 1 to about 5 to 1.

Damped valves according to the invention can have a significant beneficial effect on the operating characteristics of certain machines of which they are a part, notably vacuum pumps, as demonstrated by the improved noise performance of the example rotary piston vacuum pump described above. In addition to improved noise performance, the use of damped valves according to the invention should also improve machine efficiency and increase the operational life under certain circumstances.

## Claims

1. A damped valve comprising:
a valve element;
a valve seat for said valve element, said valve element being movable into and out of engagement with said seat to open and close said valve;
a biasing member engaging said valve element and biasing it into engagement with said seat;
a damping piston attached to said valve element, said piston projecting away from said valve seat; and
a damping chamber within which said piston is slidably received, said piston moving within said chamber along a path of travel extending toward and away from said valve seat, said damping chamber having at least one orifice which is small relatively to the cross sectional area of said piston, said orifice(s) being positioned along said path of travel away from said valve seat, said piston forcing fluid within said chamber through said orifice(s) and thereby damping motion of said valve element as the piston moves along said path of travel away from and toward the valve seat.

2. A damped valve as claimed in claim 1, being a poppet valve wherein said motion of said valve element is substantially perpendicular to said valve seat.

3. A damped valve as claimed in claim 1 or claim 2, wherein said damping chamber and said damping piston are oriented substantially coaxially with said valve seat.

4. A damped valve as claimed in claim 3, wherein both said damping chamber and said piston have circular cross sections, and preferably said orifice(s) is/are positioned facing said seat.

5. A damped valve as claimed in any of the preceding claims, wherein the ratio of the damping chamber cross sectional area relative to the total cross-sectional area of said orifice(s) is in the range of from 143 to 1 to 5 to 1, preferably in the range of from 43 to 1 to 1 to 1.

6. A damped valve as claimed in any of the preceding claims, wherein the ratio of the diameter of said chamber to the diameter of said orifice is between about 12 to 1 and about 2.4 to 1.

7. A damped valve as claimed in claim 6, wherein said damping chamber has a diameter of about 19mm (0.75 inches) and a single orifice having a diameter between about 1.6mm (0.0625 inches) and about 8mm (0.3125 inches).

8. A damped valve as claimed in claim 7, wherein said orifice has a diameter of:
- about 3mm (0.125 inches) or
- about 5mm (0.1875 inches) or
- about 6mm (0.25 inches).

9. A damped valve as claimed in any of the preceding claims, wherein said piston has a receptacle having an opening facing said orifice(s), said receptacle being sized to receive said biasing member, preferably a coil spring.

10. A damped valve as claimed in any of the preceding claims, wherein said damped valve is incorporated into a vacuum pump as a discharge valve, said damped valve providing damping to said vacuum pump and lowering its noise level of operation.

11. A damped valve as claimed in any of the preceding claims, wherein said fluid comprises a petroleum based oil, preferably of SAE grade 10W-40.

12. A damped valve as claimed in any of claims 1 to 10, wherein said fluid comprises polychlorotrifluoroethylene and/or perfluoropolyether.
